# EUROPÄISCHE PATENTANMELDUNG

(11) **EP 1 998 070 A2**
(43) Veröffentlichungstag der Anmeldung: **03.12.2008**
(21) Anmeldenummer: 08153747.4
(22) Anmeldetag: 31.03.2008
(51) Int. Cl.: F16F 9/06

(54) **Schwingungsdämpfer, insbesondere Lenkungsdämpfer**

(30) Priorität: 01.06.2007 DE 102007025733
(71) Anmelder: ZF Friedrichshafen AG, 88038 Friedrichshafen (DE)
(72) Erfinder: Berberich, Anibal, 2400 San Francisco - Córdoba (AR)

(57) **Zusammenfassung**

Schwingungsdämpfer (1), umfassend einen Zylinder (3), in dem eine Kolbenstange (5) mit einem Kolben (7) axial beweglich geführt ist, wobei der Kolben den Zylinder in einen kolbenstangenseitigen (9) und einen kolbenstangenfernen (11) Arbeitsraum unterteilt, wobei der Zylinder zumindest teilweise von einem Behälterrohr (17) eingehüllt wird und der Zylinder und das Behälterrohr einen ringförmigen Ausgleichsraum (19) begrenzen, mit einem Bodenventil (15) zwischen dem kolbenstangenfernen Arbeitsraum und dem Ausgleichsraum, wobei ein den Ausgleichsraum unter Druck haltender Vorspannraum (27) in einer Reihenanordnung zu den beiden Arbeitsraum ausgeführt ist, wobei der Vorspannraum von einem im Behälterrohr angeordneten und vom Zylinder separaten Gehäuse gebildet wird.

## Beschreibung

Die Erfindung betrifft einen Schwingungsdämpfer gemäß dem Oberbegriff von Patentanspruch 1.

Lenkungsdämpfer sind in der Regel als hydraulische Schwingungsdämpfer ausgeführt und werden sehr häufig horizontal eingebaut. Bei einem Schwingungsdämpfer in der Kolbenstange-Zylinderausführung muss das bei einer Hubbewegung der Kolbenstange verdrängte Volumen innerhalb des Zylinders ausgeglichen werden. Dafür wird ein Ausgleichsraum eingesetzt, für den verschiedene Bauformen bekannt sind. Aufgrund der horizontalen Einbaulage muss dafür gesorgt werden, dass keine Luft in den Zylinder eindringen kann, der zu einem Verschäumen des hydraulischen Dämpfmediums führen könnte.

Die theoretisch einfachste Bauform könnte darin bestehen, dass man einfach einen Schwingungsdämpfer in der Einrohrbauweise verwendet. In dem Zylinder sind zwei Arbeitskammern durch einen an der Kolbenstange befestigten Kolben getrennt. In Reihe zu dem kolbenstangenfernen Arbeitsraum ist ein z. B. gasgefüllter Ausgleichsraum angeordnet, wobei zwischen dem Arbeitsraum und dem Ausgleichsraum ein verschiebbarer Trennkolben gleitet. Ein derartiger Einrohrschwingungsdämpfer kann aber in Einfahrrichtung der Kolbenstange nur eine Dämpfkraft aufbringen, die von dem Druck im Ausgleichsraum abgestützt werden kann. Ein großer Druck im Ausgleichsraum führt jedoch zu einer großen Ausfahrkraft, die auf die Kolbenstange einwirkt. Diese Ausfahrkraft ist bei einem Lenkungsdämpfer jedoch unerwünscht, da sie einer Lenkbewegung gleich käme.

Die DE 38 40 352 A1 beschreibt einen Einrohrschwingungsdämpfer mit einem Bodenventil zwischen dem kolbenstangenfernen Arbeitsraum und dem Ausgleichsraum. In dieser Konstruktion ist innerhalb des Zylinders eine Hülse angeordnet, die das Bodenventil trägt. Auch der gasgefüllte Ausgleichsraum befindet sich innerhalb dieser Hülse. Für den Ausgleichsraum steht also ein kleinerer Durchmesser zur Verfügung als für den Kolben an der Kolbenstange. Prinzipiell ist es aber günstig einen möglichst großen Ausgleichsraum zu verwenden, da dann das Verhältnis von Kolbenstangenvolumen zu Ausgleichsraumvolumen klein ist und damit der Druckanstieg ausgehend von der ausgefahrenen Kolbenstange zur eingefahrenen Kolbenstange ebenfalls klein ist, um eine zusätzliche Ausfahrkraft zu minimieren.

Die US 2 410 539 beschreibt einen Schwingungsdämpfer nach dem Zweirohr-Bauprinzip. Konzentrisch zu dem inneren Zylinder ist ein äußeres Behälterohr angeordnet, dass über mindestens eine Anschlussöffnung mit einem externen Ausgleichsbehälter verbunden ist. Diese Bauform ist jedoch insbesondere aufgrund des zusätzlichen Behälters und dessen Anbindung besonders aufwändig.

Aus der DE 12 05 778 A ist ein Zweirohrteleskopdämpfer für den horizontalen Einbau in Kraftfahrzeugen bekannt. Zwischen dem äußeren Behälterohr und dem Zylinder kommt ein Zusatzteil zur Anwendung, dass einen Dämpfmittelstrom zwischen dem kolbenstangenseitigen Arbeitsraum und einem ringförmigen Ausgleichsraum zwischen dem Behälterrohr und dem Zylinder nur über einen unterhalb der Längsachse verlaufenden Kanal zulässt. Sollten sich bei dem horizontal eingebauten Schwingungsdämpfer im Ausgleichsraum oberhalb der Längsachse Luftblasen gesammelt haben, können diese nicht über das Bodenventil in den Zylinder eindringen.

Eine weitere Ausführungsform ist aus der DE 29 06 356 A1 bekannt, die einen Ausgleichsraum offenbart, der von einer Gasblase in dem Ringraum zwischen dem inneren Zylinder und dem äußeren Behälterrohr gebildet wird. Die Gasblase lässt sich nur sehr schwer montieren und verfügt über ein eingeschränktes Volumen.

In diesem Zusammenhang ist noch die DE 35 16 751 A1 zu nennen, die eine weiterentwickelte Form der Gasblase im besagten Ringraum zeigt, die in ihrem Aufbau aber deutlich komplizierter ist.

Die Aufgabe der vorliegenden Erfindung besteht darin, einen Schwingungsdämpfer, der auch in der horizontalen Einbaulage verwendbar ist zu realisieren, der einen insgesamt einfachen Aufbau aufweist.

Erfindungsgemäß wird die Aufgabe dadurch gelöst, dass ein den Ausgleichsraum unter Druck haltender Vorspannraum in einer Reihenanordnung zu den beiden Arbeitsraum ausgeführt ist, wobei der Vorspannraum von einem im Behälterrohr angeordneten und vom Zylinder separaten Gehäuse gebildet wird.

Ein wesentlicher Vorteil besteht darin, dass der Schwingungsdämpfer ein in sich geschlossenes Aggregat ohne Außenanschlüsse darstellt. Des Weiteren wird die Form des Gehäuses und damit die Größe des Ausgleichsraums nicht vom Zylinder beeinflusst.

Daraus ergibt sich vorteilhafterweise die Möglichkeit, dass das Gehäuse einen größeren Innendurchmesser aufweist als der Zylinder. Ein größeres Gehäuse erlaubt die Verwendung eines größeren Trennkolbens zwischen dem kolbenstangenfernen Arbeitsraum und dem Vorspannraum. Dadurch kann der Vorspannruck auf den Trennkolben deutlich verringert werden.

Gemäß einem vorteilhaften Unteranspruch wird das Gehäuse in Richtung des Zylinders von dem Bodenventil begrenzt wird.

Zur Positionierung des Gehäuses im Behälterrohr weist das Bodenventil einen Zentrieransatz für das Gehäuse auf.

Das Gehäuse kann als Baueinheit in dem Behälterrohr montiert werden, da das Gehäuse an dem dem Bodenventil gegenüberliegenden Ende von einem vom Behälterrohr unabhängigen Deckel verschlossen wird.

Um eine größtmögliche Wärmeabfuhr zu erreichen, liegt zwischen dem Gehäuse und der Innenwandung des Behälterrohres ein mit Dämpfmedium gefüllter Ringraum vor.

Anhand der folgenden Figurenbeschreibung soll die Erfindung näher erläutert werden.

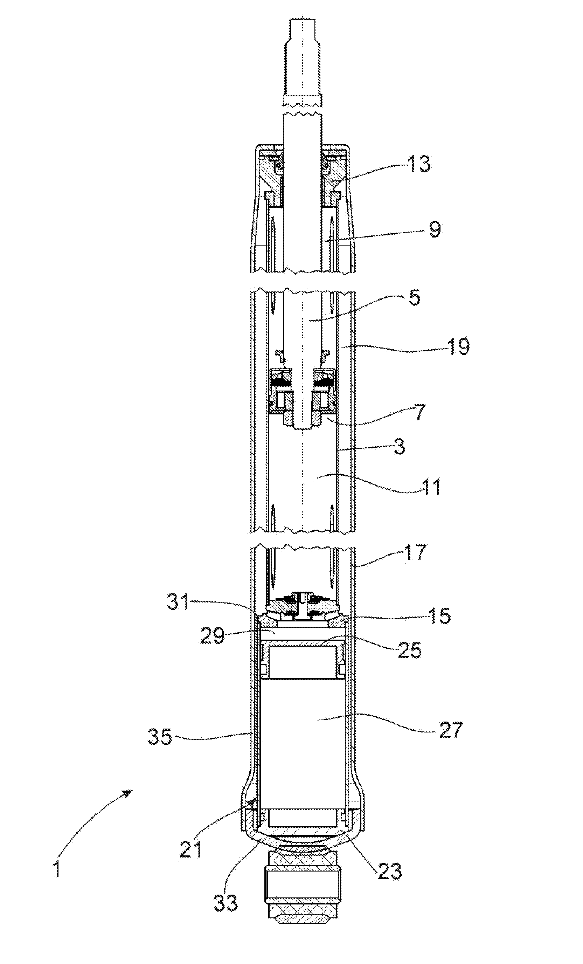

Die einzige Figur zeigt einen Schwingungsdämpfer 1 mit einem Zylinder 3, in dem eine Kolbenstange 5 zusammen mit einem Kolben 7 axial beweglich geführt ist. Der mit Dämpfventilen bestückte Kolben 7 unterteilt den Zylinder 3 in einem kolbenstangenseitigen Arbeitsraum 9 und einen kolbenstangenfernen Arbeitsraum 11. An einem Ende wird der Zylinder 3 von einer Kolbenstangenführung 13 verschlossen. Am anderen Ende ist ein Bodenventil 15 angeordnet, das ein in Einfahrrichtung der Kolbenstange wirksames Dämpfventil und für die Ausfahrrichtung ein sich in Strömungsrichtung des kolbenstangenfernen Arbeitsraums öffnendes Rückschlagventil aufweist.

Der gesamte Zylinder 3 wird von einem konzentrisch angeordneten Behälterrohr 17 eingehüllt, wobei zwischen dem Behälterrohr und der Außenwandung des Zylinders ein mit Dämpfmedium gefüllter Ausgleichsraum 19 vorliegt. In Reihe zu den beiden Arbeitsräumen 9; 11 im Zylinder 3 ist in dem Behälterrohr 17 ein vom Behälterrohr separates Gehäuse 21 angeordnet. Das Gehäuse wird in Richtung des Zylinders von dem Bodenventil 15 begrenzt. An dem gegenüberliegenden Ende schließt ein vom Behälterrohr unabhängiger Deckel 23 das Gehäuse 21. In dem Gehäuse 21 ist ein axial verschiebbarer Trennkolben 25 angeordnet, der einen Vorspannraum 27 von einem zwischen dem Bodenventil und dem Trennkolben vorliegenden Teilausgleichsraum 29 trennt. Der Vorspannraum ist z. B. Stickstoff oder Luft gefüllt, wobei das Druckniveau nur unwesentlich größer ist als der Umgebungsdruck des Schwingungsdämpfers. Das Gehäuse 21 ist zwischen einem Zentrieransatz 31 des Bodenventils 15 und einem Behälterrohrboden 33 verspannt.

Wie aus der Figur ersichtlich ist, weist das Gehäuse einen größeren Innendurchmesser auf als der Zylinder. Dadurch kann das Druckniveau im Vorspannraum 27 sehr klein gehalten werden, wobei das Druckniveau im Vorspannraum durch die Zwischenschaltung des Bodenventils 15 von der maximalen Dämpfkraft in Einfahrrichtung teilweise entkoppelt ist. Der große Trennkolben sorgt für ein großes Volumen im Gehäuse, so dass das von der Kolbenstange in Einfahrrichtung verdrängte Volumen zum Gehäusevolumen günstig ausfällt.

Das Behälterrohr ist zu dem so groß ausgeführt, dass auch zwischen dem Gehäuse 21 und der innenwandung des Behälterrohres ein Ringraum 35 als weiterer Teil des Gesamtvolumens des Ausgleichsraum genutzt werden kann, insbesondere mit dem Vorteil, dass die Wärmeabfuhr über eine besonders große Fläche erfolgen kann. Dadurch kann der Temperaturanstieg im Vorspannraum und damit eine u. U. auf die Kolbenstange wirksame Ausschubkraft klein gehalten werden.

## Patentansprüche

1. Schwingungsdämpfer, umfassend einen Zylinder, in dem eine Kolbenstange mit einem Kolben axial beweglich geführt ist, wobei der Kolben den Zylinder in einen kolbenstangenseitigen und einen kolbenstangenfernen Arbeitsraum unterteilt, wobei der Zylinder zumindest teilweise von einem Behälterrohr eingehüllt wird und der Zylinder und das Behälterrohr einen ringförmigen Ausgleichsraum begrenzen, wobei ein Bodenventil zwischen dem kolbenstangenfernen Arbeitsraum und dem Ausgleichsraum angeordnet ist,
**dadurch gekennzeichnet,**
**dass** ein den Ausgleichsraum (19; 29; 35) unter Druck haltender Vorspannraum (27) in einer Reihenanordnung zu den beiden Arbeitsraum (9; 11) ausgeführt ist, wobei der Vorspannraum (27) von einem im Behälterrohr (17) angeordneten und vom Zylinder (3) separaten Gehäuse (21) gebildet wird.

2. Schwingungsdämpfer nach Anspruch 1,
**dadurch gekennzeichnet,**
**dass** das Gehäuse (21) einen größeren Innendurchmesser aufweist als der Zylinder (3).

3. Schwingungsdämpfer nach Anspruch 1,
**dadurch gekennzeichnet,**
**dass** das Gehäuse (21) in Richtung des Zylinders (3) von dem Bodenventil (15) begrenzt wird.

4. Schwingungsdämpfer nach Anspruch 3,
**dadurch gekennzeichnet,**
**dass** das Bodenventil (15) einen Zentrieransatz (31) für das Gehäuse (21) aufweist.

5. Schwingungsdämpfer nach Anspruch 3,
**dadurch gekennzeichnet,**
**dass** das Gehäuse (21) an dem dem Bodenventil (15) gegenüberliegenden Ende von einem vom Behälterrohr (17) unabhängigen Deckel (23) verschlossen wird.

6. Schwingungsdämpfer nach Anspruch 1,
**dadurch gekennzeichnet,**
**dass** zwischen dem Gehäuse (21) und der Innenwandung des Behälterrohres (17) ein mit Dämpfmedium gefüllter Ringraum (35) vorliegt.
